# EUROPEAN PATENT APPLICATION

(11) **EP 4 477 447 A1**
(43) Date of publication of application: **18.12.2024**
(21) Application number: 23179528.7
(22) Date of filing: 15.06.2023
(51) Int. Cl.: B60L 1/00, B60L 58/13, B60L 58/24, B60L 58/32, B60L 58/40, H01M 8/04303, H01M 8/04492, H01M 8/04955

(54) **COMPUTER SYSTEM AND METHOD FOR A VEHICLE**

(71) Applicant: VOLVO TRUCK CORPORATION, 405 08 Göteborg (SE)
(72) Inventor: NORDHOLM, Linus, 436 40 ASKIM (SE); BERNTSSON, Simon, 417 53 GÖTEBORG (SE); KARLSSON, Robert, 471 93 KÅLLEKÄRR (SE); SMIDEBRANT, Tobias, 415 51 GÖTEBORG (SE); LENNEVI, Jerker, 443 92 LERUM (SE)
(74) Representative: Ström & Gulliksson AB

(57) **Abstract**

A computer system (**100**) is provided, comprising processing circuitry (**102**) configured to determine at least one vehicle system (**10, 12**) being in an active mode, said at least one vehicle system (**10, 12**) building up a need for conditioning when in the active mode and/or in an inactive mode, determine that no request for usage of the at least one vehicle system (**10, 12**) is present, thereby triggering a request for shut down of said at least one vehicle system (**10, 12**), determine a need for conditioning of said at least one vehicle system (**10, 12**), delay shut down of said at least one vehicle system (**10, 12**), and initiate conditioning of said at least one vehicle system (**10, 12**).

## Description

### TECHNICAL FIELD

The disclosure relates generally to vehicles. In particular aspects, the disclosure relates to a computer system and a method for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Different types of vehicle systems, such as fuel cell systems and battery systems, require regular conditioning to ensure optimal performance, longevity, and safety. The purpose of conditioning is to establish and maintain the ideal operating parameters for the particular vehicle system, thereby aiming to maximizing their efficiency and lifespan.

As part of periodic maintenance of a vehicle system automated conditioning processes are typically controlled by the vehicle's onboard hardware and software. For example, a battery management system may be programmed to perform a plurality of different conditioning tasks at regular intervals and/or usage, such as balancing of charge distribution, temperature control, and controlling charging and discharging processes to maintain the battery within the recommended state-of-charge range.

Another example relates to fuel cells, which are typically controlled by systems that automate conditioning processes like humidification control and various operating parameter control.

Conditioning of a vehicle system is traditionally based on a timer setting after shut down. When the vehicle is controlled to shut down, the vehicle's onboard hardware and software set a time delay until actual shut down occurs, thereby allowing the time delay to be used for conditioning purposes, if needed. Another approach is to initiate conditioning by so called intermittent awakening from a shut down state.

As is evident from above, the available time for conditioning may not always be aligned with the actual need for conditioning. Additionally, unnecessarily long time are made available for conditioning to accommodate the need of the vehicle system, however at cost of for example delayed shutdowns which will affect the energy usage negatively. Consequently, there is a risk that vehicle systems are not operating properly, and that the components of the vehicle system are subject to increased wear. There is thus a need for new and improved methods and computer systems for conditioning of various vehicle systems.

### SUMMARY

According to a first aspect of the disclosure, a computer system is provided. The computer system comprises processing circuitry configured to determine at least one vehicle system being in an active mode, said at least one vehicle system building up a need for conditioning when in the active mode and/or in an inactive mode, determine that no request for usage of the at least one vehicle system is present, thereby triggering a request for shut down of said at least one vehicle system, determine a need for conditioning of said at least one vehicle system, delay shut down of said at least one vehicle system, and initiate conditioning of said at least one vehicle system. The first aspect of the disclosure may seek to improve the abilities of the at least one vehicle system both in terms of performance and lifetime. A technical benefit may include reducing the need for additional wakeups.

Optionally in some examples, including in at least one preferred example, the processing circuitry is further configured to shut down said at least one vehicle system after completing said conditioning of said at least one vehicle system. A technical benefit may include restoring and fulfilling the shut down request while housekeeping the need for conditioning on the negative flank of lack of usage request of the vehicle system.

Optionally in some examples, including in at least one preferred example, the processing circuitry is further configured to receive a request for active usage of said at least one vehicle system, and to terminate the conditioning based on the request for active usage. A technical benefit may include the possibility to override the delay for shut down in case the vehicle system is needed to be active, e.g. upon start of the vehicle.

Optionally in some examples, including in at least one preferred example, the processing circuitry is further configured to receive a request for cancelling conditioning of said at least one vehicle system, and to terminate the conditioning based on the request for cancelling. A technical benefit may include the possibility to avoid unnecessary conditioning of the vehicle system, e.g. if the vehicle system does not benefit from further conditioning.

Optionally in some examples, including in at least one preferred example, the processing circuitry is further configured to receive a request for shut down of said at least one vehicle system after initiating conditioning of said at least one vehicle system, and to terminate the conditioning based on the request for shut down. A technical benefit may include allowing for immediate shut down of the vehicle system, e.g. during service and maintenance of the associated vehicle.

Optionally in some examples, including in at least one preferred example, the processing circuitry is further configured to block reactivation of the conditioning thereby preventing conditioning to be initiated until the reactivation block is removed. A technical benefit may include improved service and maintenance, especially in situations where a startup of the vehicle system is included in the service scheme. By blocking reactivation of conditioning the vehicle system will be prevented from conditioning after a request for shut down.

Optionally in some examples, including in at least one preferred example, the at least one vehicle system is a rechargeable energy storage system or a fuel cell system. A technical benefit may include improved housekeeping of vehicle systems generally in need for a substantial amount of conditioning in order to function properly.

Optionally in some examples, including in at least one preferred example, the at least one vehicle system is a rechargeable energy storage system or a fuel cell system, and the processing circuitry is further configured to shut down said at least one vehicle system after completing said conditioning of said at least one vehicle system, receive a request for active usage of said at least one vehicle system, receive a request for cancelling conditioning of said at least one vehicle system, or receive a request for shut down of said at least one vehicle system, and terminate the conditioning based on the request for active usage, cancelling, and/or shutdown.

According to a second aspect of the disclosure, a vehicle is provided. The vehicle comprises the computer system of the first aspect.

Optionally in some examples, including in at least one preferred example, the vehicle further comprises at least one rechargeable energy storage system and/or at least one fuel cell system.

According to third aspect of the disclosure, a computer-implemented method is provided. The method comprises determining, by processing circuitry of a computer system, at least one vehicle system being in an active mode, said at least one vehicle system building up a need for conditioning when in the active mode and/or in an inactive mode. The method further comprises determining, by the processing circuitry, that no request for usage of the at least one vehicle system is present, triggering, by the processing circuitry, a request for shut down of said at least one vehicle system, determining, by the processing circuitry, a need for conditioning of said at least one vehicle system, delaying, by the processing circuitry, shut down of said at least one vehicle system, and initiating, by the processing circuitry, conditioning of said at least one vehicle system.

Optionally in some examples, including in at least one preferred example, the method further comprises shutting down, by the processing circuitry, said at least one vehicle system after completing said conditioning of said at least one vehicle system. A technical benefit may include restoring and fulfilling the shut down request while housekeeping the need for conditioning on the negative flank of lack of usage request of the vehicle system.

Optionally in some examples, including in at least one preferred example, the method further comprises receiving, by the processing circuitry, a request for active usage of said at least one vehicle system, and terminating, by the processing circuitry, the conditioning based on the request for active usage. A technical benefit may include the possibility to override the delay for shut down in case the vehicle system is needed to be active, e.g. upon start of the vehicle. A further technical benefit may include the possibility to abort housekeeping. For example, conditioning may be controlled to start upon start of the vehicle. By terminating the conditioning, i.e. the housekeeping operation, there will be no delay in starting the vehicle due to running conditioning processes.

Optionally in some examples, including in at least one preferred example, the method further comprises receiving, by the processing circuitry, a request for cancelling conditioning of said at least one vehicle system, and terminating the conditioning based on the request for cancelling. A technical benefit may include the possibility to avoid unnecessary conditioning of the vehicle system, e.g. if the vehicle system does not benefit from further conditioning.

Optionally in some examples, including in at least one preferred example, the method further comprises receiving, by the processing circuitry, a request for shut down of said at least one vehicle system, and terminating the conditioning based on the request for shut down. A technical benefit may include allowing for immediate shut down of the vehicle system, e.g. during service and maintenance of the associated vehicle.

Optionally in some examples, including in at least one preferred example, the further comprises blocking reactivation of the conditioning thereby preventing conditioning to be initiated until the reactivation block is removed. A technical benefit may include improved service and maintenance, especially in situations where a startup of the vehicle system is included in the service scheme. By blocking reactivation of conditioning the vehicle system will be prevented from conditioning after a request for shut down.

Optionally in some examples, including in at least one preferred example, the at least one vehicle system is a rechargeable energy storage system or a fuel cell system. A technical benefit may include improved housekeeping of vehicle systems generally in need for a substantial amount of conditioning in order to function properly.

Optionally in some examples, including in at least one preferred example, the method further comprises determining, by the processing circuitry, a plurality of vehicle systems being in an active mode, each vehicle system building up a need for conditioning when in the active mode and/or in an inactive mode, determining, by the processing circuitry, that no request for usage of at least one specific vehicle system is present, triggering, by the processing circuitry, a request for shut down of each vehicle systems, determining, by the processing circuitry, a need for conditioning of said at least one specific vehicle system, delaying, by the processing circuitry, shut down of said at least one specific vehicle system, and initiating, by the processing circuitry, conditioning of said at least one specific vehicle system. A technical benefit may include parallel housekeeping of multiple vehicle systems.

Optionally in some examples, including in at least one preferred example, the method further comprises shutting down, without any delay, any vehicle system for which no need for conditioning is determined. A technical benefit may include selective housekeeping of the particular vehicle systems currently in need for conditioning.

According to a fourth aspect of the disclosure, a computer program product is provided. The computer program product comprises program code for performing, when executed by the processing circuitry, the method of the third aspect.

According to a fifth aspect of the disclosure, a non-transitory computer-readable storage medium is provided. The non-transitory computer-readable storage medium comprises instructions, which when executed by the processing circuitry, cause the processing circuitry to perform the method of the third aspect.

While the disclosed aspects have been described with reference to vehicles and vehicle applications, it should be noted that the disclosed aspects may also be used with stationary applications, such energy storage systems for power boost, peak shaving, electricity trading services, frequency ancillary services, etc.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary view of a vehicle according to an example.
**FIG. 2** is an exemplary system diagram of a vehicle according to an example.
**FIG. 3** is another view of **FIG. 2**, according to an example.
**FIG. 4** is a diagram of an exemplary method to control conditioning of a vehicle system according to an example.
**FIG. 5** is a flow chart of an exemplary method to control conditioning of a vehicle system according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

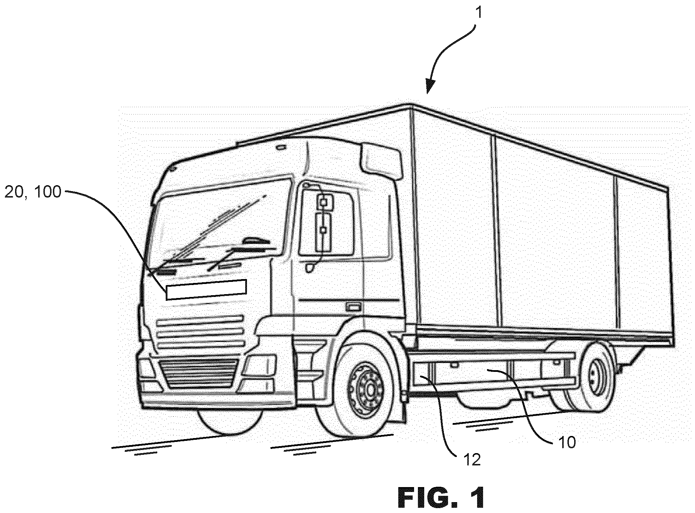

**FIG. 1** is an exemplary side view of a vehicle **1** according to one example. The vehicle **1**, here in the form of a truck, comprises one or more vehicle systems **10**, **12**. Each vehicle system **10, 12** is typically responsible for a specific task; the vehicle systems **10, 12** may for example comprise a rechargeable energy storage system **10** or a fuel cell system **12**. Each one of the vehicle systems **10, 12** is constructed to build up a need for conditioning to function properly.

The term "conditioning" should in this context be interpreted broadly, as any process performed to prepare and adjust the vehicle system **10, 12** with the aim of establishing ideal operating conditions for the vehicle system **10, 12** and its components.

The vehicle system **10, 12** is either in an active mode (i.e. an operating mode when the vehicle system **10, 12** is in use) or in an inactive mode (i.e. a non-operating mode when the vehicle is shut down or when the vehicle system **10, 12** is for other reasons not in use). Within this specification conditioning is a process which is performed while the vehicle system **10, 12** is not having a request for active usage.

In some examples, conditioning of a rechargeable energy storage system **10**, such as a battery system, may comprise balancing of charge distribution, temperature control, and/or controlling charging and discharging processes to maintain the battery within the recommended state-of-charge range.

In some examples, conditioning of a fuel cell system **12** may comprise pressure control, humidity control, and/or temperature control.

When in use, each vehicle system **10, 12** builds up a need for conditioning. It should however be noted that each vehicle system **10, 12** may also build up a need for conditioning while not in use. Normally, the need for conditioning is dependent on the amount of use; if the vehicle system **10, 12** is used for a long time and/or with a high intensity, the need for conditioning increases as compared to the vehicle system **10, 12** being used for a short time and/or with a low intensity. Conditioning may be performed as a process being designed for the current needs. Hence, substantive conditioning may be required after long and/or heavy use of the vehicle system **10, 12**, while less substantive conditioning may be required after short and/or light use of the vehicle system **10, 12**.

The vehicle **1** further comprises a control system **20** being configured to control conditioning of the one or more vehicle systems **10, 12**.

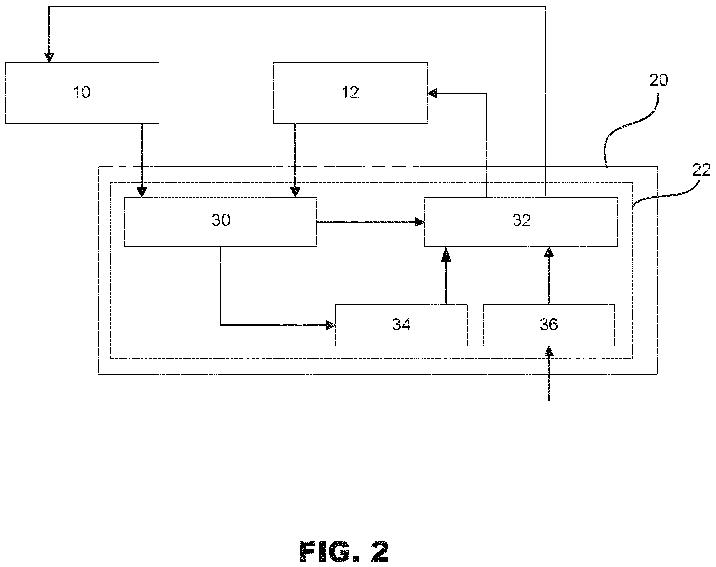

**FIG. 2** shows the vehicle **1** in terms of a system diagram of a control system **20** representing the hardware architecture required to control conditioning of at least one vehicle system **10, 12**.

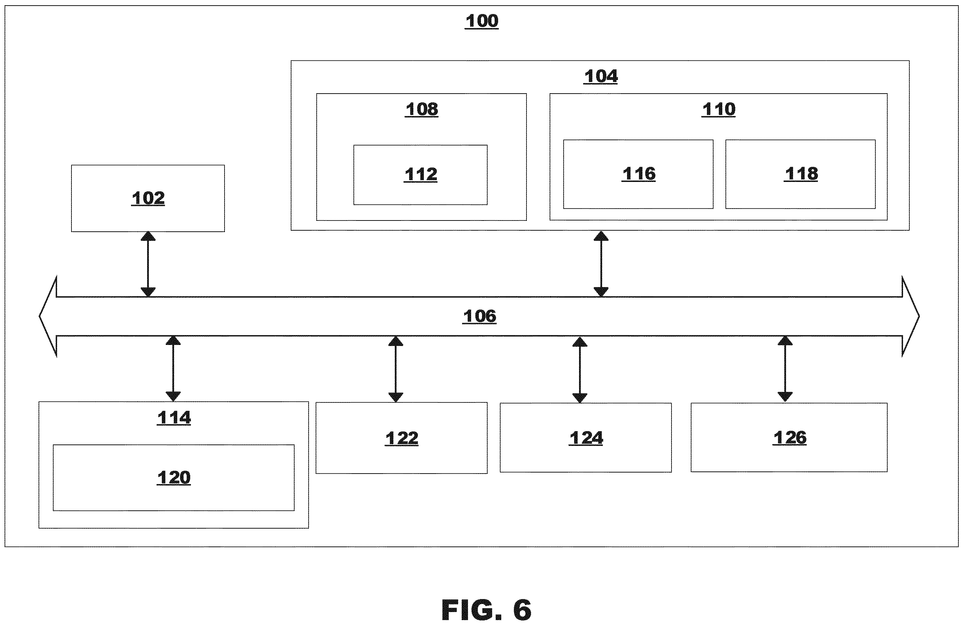

The control system **20** comprises one or more control units **22**. The one or more control units **22** is configured to receive data, and to process the data in order to perform housekeeping of the vehicle systems **10, 12** with regards to their respective need for conditioning. The one or more control units **22** may be implemented as a processor device **102**, see **FIG. 6****.**

The one or more control units **22** comprises a receiving circuit **30** being configured to communicate with the one or more vehicle systems **10, 12**, and to receive data representing information that the vehicle system **10, 12** is in active mode. As the vehicle system **10, 12** is in active mode, a need for conditioning is built up.

The receiving circuit **30** is further configured to receive data representing information that there is no active request for usage of the vehicle system **10, 12**. The receiving circuit **30** is configured to transmit such information to an output circuit **32** which is configured to issue a request for shut down of the vehicle system **10, 12**.

The one or more control units **22** further comprises a conditioning evaluation circuit **34** configured to determine if the vehicle system **10, 12** is in need for conditioning to any extent. When the conditioning evaluation circuit **34** determines that there is a need for conditioning, the conditioning evaluation circuit **34** will transmit delay data to the output circuit **32** which, upon receipt of the delay data, instead transmits command data to initiate conditioning of the vehicle system **10, 12**.

During normal circumstances, the conditioning process will end when finished.

The one or more control units **22** may further comprise a termination circuit **36** configured to determine that conditioning needs to be terminated, whereupon the output circuit **34** is configured to transmit control data to the vehicle system **10, 12** such that conditioning is terminated.

The termination circuit **36** may for example be configured to receive a request for active usage of the vehicle system **10, 12,** whereby the output circuit **34** is configured to transmit control data to the vehicle system **10, 12** such that conditioning is terminated.

The termination circuit **36** may in one example be configured to receive a request for cancelling conditioning of the vehicle system **10, 12,** whereby the output circuit **34** is configured to transmit control data to the vehicle system **10, 12** such that conditioning is terminated.

The termination circuit **36** may in one example be configured to receive a request for active usage of the vehicle system **10, 12,** whereby the output circuit **34** is configured to transmit control data to the vehicle system **10, 12** such that conditioning is terminated.

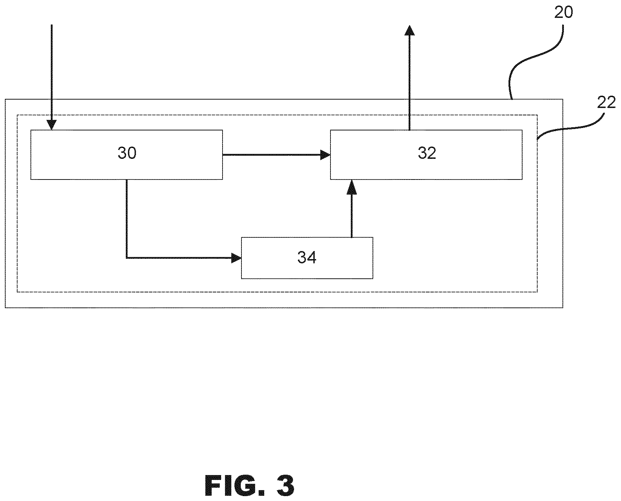

**FIG. 3** is another view of **FIG. 2****,** according to an example. A processor device **102** is forming part of a computer system **100** of a vehicle **1**. As mentioned previously the processor device **102** may represent one or more control units **22**, and the computer system **100** may represent a control system **20**. The processor device **102** is configured to control conditioning of one or more vehicle systems **10, 12**.

The processor device **102** comprises a receiving circuit **30** programmed to determine that at least one vehicle system **10, 12** is in an active mode. Due to the vehicle system **10,12** is in such active mode, a need for conditioning is built up.

The receiving circuit **30** is further configured to receive data that no request for usage of the at least one vehicle system **10, 12** is present. Upon such determination, an output circuit **32** is configured to transmit a request for shut down of said at least one vehicle system **10, 12.**

The processor device **102** further comprises a conditioning evaluation circuit **34**. The conditioning evaluation circuit **34** is configured to determine a need for conditioning of the vehicle system **10, 12**. When such need for conditioning is determined, instead of transmitting the request for shut down of the vehicle system **10, 12** the output circuit **32** is instead configured to delay shut down of the vehicle system **10, 12,** and to initiate conditioning of said the vehicle system **10, 12**.

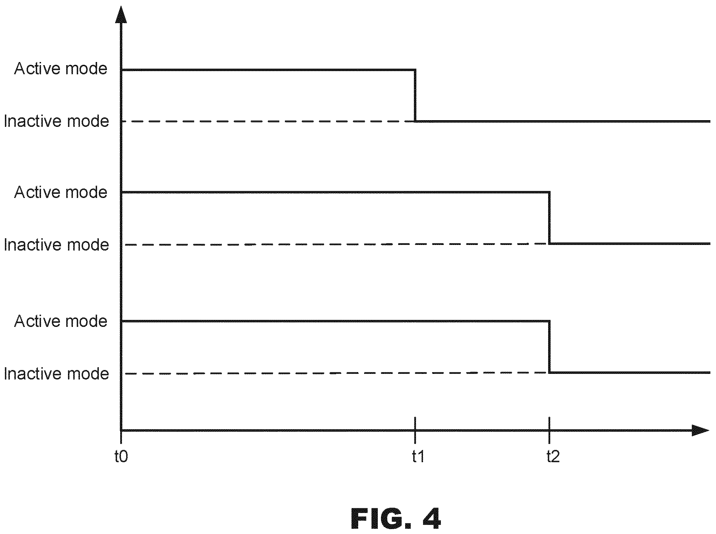

**FIG. 4** is a diagram showing a general procedure for controlling conditioning of a vehicle system **10, 12** according to an example. As can be seen in **FIG. 4**, three different processes run in parallel from an initial time **t0**. The upper curve represents a request for active use of the vehicle system **10, 12**. Active use may for example be requested by a host controller or any other available control unit or control system. As shown in **FIG. 4**, active use of the vehicle system **10, 12** is requested at time **t0** and at time **t1** there is no longer a request for active use of the vehicle system **10, 12**.

At the same initial time **t0**, there is a need for conditioning of the vehicle system 10, 12. This need for conditioning is represented by the second upper, or center, curve. The need for conditioning, for example determined by the conditioning evaluation circuit **34**, lasts from time **t0** to time **t2**. This means that at time **t1**, when there is no longer a request for active use of the vehicle system **10, 12**, the need for conditioning is maintained for an additional time represented by **t2** - **t1**, which corresponds to the time required to perform adequate conditioning of the vehicle system **10, 12**.

The bottom curve represents control of the vehicle system **10, 12** in active mode. As the request for active mode terminates at **t1**, but the need for conditioning lasts until time **t2**, the vehicle system **10, 12** is maintained in active mode until time **t2**. This means that unless there is a command for interruption, the need for conditioning (as represented by the center curve) sets the time for which the vehicle system **10, 12** is maintained in active mode although there is no active request for active mode. Hence, conditioning may occur between times **t1** and **t2**.

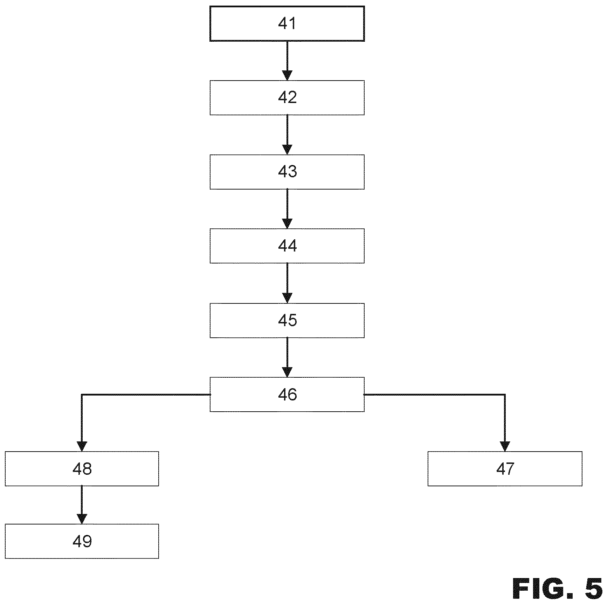

**FIG. 5** is a flow chart of a method **40** for controlling conditioning of a vehicle system **10, 20** of a vehicle **1**. The method **40** is configured to determining **41**, by processing circuitry **102** of a computer system **100**, at least one vehicle system **10, 12** being in an active mode. As mentioned previously and throughout this specification, the vehicle system **10, 12** is configured to build up a need for conditioning when in the active mode.

The method **40** further comprises determining **42** that no request for usage of the at least one vehicle system is present. Referring back to **FIG. 4**, this represents time **t1**.

When there is no active request for usage of the vehicle system **10, 12**, the method **40** comprises triggering **43** a request for shut down of the vehicle system **10, 12**.

The method **40** further comprises determining **44** a need for conditioning of the vehicle system **10, 12**. When such need for conditioning is present, the method **40** comprises delaying **45** shut down of the vehicle system **10, 12**, and initiating **46** conditioning of the vehicle system **10, 12**.

It should be noted that triggering **43** a request for shut down may be performed after initiating **46** conditioning.

The method **40** may further comprise shutting down **47** the vehicle system **10, 12** after completing said conditioning of the vehicle system **10, 12**.

After initiating **46** conditioning, the method **40** may comprise receiving **48** a request for terminating conditioning of the vehicle system **10, 12**. Upon such receipt, the method **40** comprises terminating **49** conditioning based on the request.

The request for termination may be a request for active usage of the vehicle system **10, 12**, a request for cancelling conditioning of the vehicle system **10, 12**, and/or a request for shut down of the vehicle system **10, 12**.

As understood from the foregoing, the method **40** may be performed for a plurality of vehicle systems **10, 12**. A plurality of vehicle systems **10, 12** may be determined **41** to be in an active mode, and the method **40** may determine **41** that no request for usage of at least one specific vehicle system **10,** 12 is present. If the method **40** determines **44** that there is a need for conditioning that specific vehicle system **10, 12**, the method **40** is delaying **45** shut down of the particular vehicle system **10, 12** and initiates **46** conditioning of the specific vehicle system **10, 12**.

While the method **40** may trigger **43** a request for shut down of each vehicle system, preferably the method **40** is shutting down **47**, without any delay, only the vehicle system(s) **10, 12** for which no need for conditioning is determined.

**FIG. 6** is a schematic diagram of a computer system **100** for implementing examples disclosed herein. The computer system **100** is adapted to execute instructions from a computer-readable medium to perform these and/or any of the functions or processing described herein. The computer system **100** may be connected (e.g., networked) to other machines in a LAN, an intranet, an extranet, or the Internet. While only a single device is illustrated, the computer system **100** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **100** may comprise at least one computing device or electronic device capable of including firmware, hardware, and/or executing software instructions to implement the functionality described herein. The computer system **100** may include processing circuitry **102** (e.g., processing circuitry including one or more processor devices or control units), a memory **104**, and a system bus **106**. The computer system **100** may include at least one computing device having the processing circuitry **102**. The system bus **106** provides an interface for system components including, but not limited to, the memory **104** and the processing circuitry **102**. The processing circuitry **102** may include any number of hardware components for conducting data or signal processing or for executing computer code stored in memory **104**. The processing circuitry **102** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **102** may further include computer executable code that controls operation of the programmable device.

The system bus **106** may be any of several types of bus structures that may further interconnect to a memory bus (with or without a memory controller), a peripheral bus, and/or a local bus using any of a variety of bus architectures. The memory **104** may be one or more devices for storing data and/or computer code for completing or facilitating methods described herein. The memory **104** may include database components, object code components, script components, or other types of information structure for supporting the various activities herein. Any distributed or local memory device may be utilized with the systems and methods of this description. The memory **104** may be communicably connected to the processing circuitry **102** (e.g., via a circuit or any other wired, wireless, or network connection) and may include computer code for executing one or more processes described herein. The memory **104** may include non-volatile memory **108** (e.g., read-only memory (ROM), erasable programmable read-only memory (EPROM), electrically erasable programmable read-only memory (EEPROM), etc.), and volatile memory **110** (e.g., randomaccess memory (RAM)), or any other medium which can be used to carry or store desired program code in the form of machine-executable instructions or data structures and which can be accessed by a computer or other machine with processing circuitry **102**. A basic input/output system (BIOS) **112** may be stored in the non-volatile memory **108** and can include the basic routines that help to transfer information between elements within the computer system **100**.

The computer system **100** may further include or be coupled to a non-transitory computer-readable storage medium such as the storage device **114**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **114** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **114** and/or in the volatile memory **110**, which may include an operating system **116** and/or one or more program modules **118**. All or a portion of the examples disclosed herein may be implemented as a computer program **120** stored on a transitory or non-transitory computer-usable or computer-readable storage medium (e.g., single medium or multiple media), such as the storage device **114**, which includes complex programming instructions (e.g., complex computer-readable program code) to cause the processing circuitry **102** to carry out actions described herein. Thus, the computer-readable program code of the computer program **120** can comprise software instructions for implementing the functionality of the examples described herein when executed by the processing circuitry **102**. In some examples, the storage device **114** may be a computer program product (e.g., readable storage medium) storing the computer program **120** thereon, where at least a portion of a computer program **120** may be loadable (e.g., into a processor) for implementing the functionality of the examples described herein when executed by the processing circuitry **102**. The processing circuitry **102** may serve as a controller or control system for the computer system **100** that is to implement the functionality described herein.

The computer system **100** may include an input device interface **122** configured to receive input and selections to be communicated to the computer system **100** when executing instructions, such as from a keyboard, mouse, touch-sensitive surface, etc. Such input devices may be connected to the processing circuitry **102** through the input device interface **122** coupled to the system bus **106** but can be connected through other interfaces, such as a parallel port, an Institute of Electrical and Electronic Engineers (IEEE) 1394 serial port, a Universal Serial Bus (USB) port, an IR interface, and the like. The computer system **100** may include an output device interface **124** configured to forward output, such as to a display, a video display unit (e.g., a liquid crystal display (LCD) or a cathode ray tube (CRT)). The computer system **100** may include a communications interface **126** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Example 1:** A computer system (**100**) comprising processing circuitry (**102**) configured to: determine at least one vehicle system (**10, 12**) being in an active mode, said at least one vehicle system (**10, 12**) being configured to build up a need for conditioning when in the active mode, determine that no request for usage of the at least one vehicle system (**10, 12**) is present, thereby triggering a request for shut down of said at least one vehicle system (**10, 12**), determine a need for conditioning of said at least one vehicle system (**10, 12**), delay shut down of said at least one vehicle system (**10, 12**), and initiate conditioning of said at least one vehicle system (**10, 12**).

**Example 2:** The computer system of Example 1, wherein the processing circuitry is further configured to: shut down said at least one vehicle system (**10, 12**) after completing said conditioning of said at least one vehicle system (**10, 12**).

**Example 3:** The computer system of any of Examples 1-2, wherein the processing circuitry is further configured to: receive a request for active usage of said at least one vehicle system (**10, 12**), and terminate the conditioning based on the request for active usage.

**Example 4:** The computer system of any of Examples 1-3, wherein the processing circuitry is further configured to: receive a request for cancelling conditioning of said at least one vehicle system (**10, 12**), and terminate the conditioning based on the request for cancelling.

**Example 5:** The computer system of any of Examples 1-4, wherein the processing circuitry is further configured to: receive a request for shut down of said at least one vehicle system (**10, 12**) after initiating conditioning of said at least one vehicle system (**10, 12**), and terminate the conditioning based on the request for shut down.

**Example 6:** The computer system of any of Examples 1-5, wherein said at least one vehicle system (**10, 12**) is a rechargeable energy storage system (**10**) or a fuel cell system (12).

**Example 7:** The computer system of Example 1, wherein said at least one vehicle system (**10, 12**) is a rechargeable energy storage system (**10**) or a fuel cell system (**12**), and wherein the processing circuitry (**102**) is further configured to: shut down said at least one vehicle system (**10, 12**) after completing said conditioning of said at least one vehicle system (**10, 12**), receive a request for active usage of said at least one vehicle system (**10, 12**), receive a request for cancelling conditioning of said at least one vehicle system (**10, 12**), or receive a request for shut down of said at least one vehicle system (**10, 12**), and terminate the conditioning based on the request for active usage, cancelling, and/or shutdown.

**Example 8:** A vehicle (**1**) comprising the computer system (**100**) of any of Examples 1-7.

**Example 9:** The vehicle of Example 8, further comprising at least one rechargeable energy storage system (**10**).

**Example 10:** The vehicle of Example 8 or 9, further comprising at least one fuel cell system (**12**).

**Example 11:** A computer-implemented method (**40**), comprising: determining (**41**), by processing circuitry (**102**) of a computer system, at least one vehicle system (**10, 12**) being in an active mode, said at least one vehicle system (**10, 12**) being configured to build up a need for conditioning when in the active mode, determining (**42**), by the processing circuitry (**102**), that no request for usage of the at least one vehicle system (**10, 12**) is present, triggering (**43**), by the processing circuitry (**102**), a request for shut down of said at least one vehicle system (**10, 12**), determining (**44**), by the processing circuitry (**102**), a need for conditioning of said at least one vehicle system (**10, 12**), delaying (**45**), by the processing circuitry (**102**), shut down of said at least one vehicle system (**10, 12**), and initiating (**46**), by the processing circuitry (**102**), conditioning of said at least one vehicle system (**10, 12**).

**Example 12:** The method of Example 11, further comprising: shutting down (**47**), by the processing circuitry (**102**), said at least one vehicle system (**10, 12**) after completing said conditioning of said at least one vehicle system (**10, 12**).

**Example 13:** The method of any of Examples 11-12, further comprising: receiving (**48**), by the processing circuitry (**102**), a request for active usage of said at least one vehicle system (**10, 12**), and terminating (**49**), by the processing circuitry (**102**), the conditioning based on the request for active usage.

**Example 14:** The method of any of Examples 11-13, further comprising: receiving (**48**), by the processing circuitry (**102**), a request for cancelling conditioning of said at least one vehicle system (**10, 12**), and terminating (**49**), by the processing circuitry (**102**), the conditioning based on the request for cancelling.

**Example 15:** The method of any of Examples 11-14, wherein the processing circuitry is further configured to: receiving (**48**), by the processing circuitry (**102**), a request for shut down of said at least one vehicle system (**10, 12**), and terminating (**49**), by the processing circuitry (**102**), the conditioning based on the request for shut down.

**Example 16:** The method of any of Examples 11-15, wherein said at least one vehicle system (**10, 12**) is a rechargeable energy storage system (**10**) or a fuel cell system (**12**).

**Example 17:** The method of any of Examples 11-16, further comprising: determining (**41**), by the processing circuitry (**102**), a plurality of vehicle systems (**10, 12**) being in an active mode, each vehicle system (**10, 12**) being configured to build up a need for conditioning when in the active mode, determining (**42**), by the processing circuitry (**102**), that no request for usage of at least one specific vehicle system (**10, 12**) is present, triggering (**43**), by the processing circuitry (**102**), a request for shut down of each vehicle systems (**10**, **12**), determining (**44**), by the processing circuitry (**102**), a need for conditioning of said at least one specific vehicle system (**10, 12**), delaying (**45**), by the processing circuitry (**102**), shut down of said at least one specific vehicle system (**10, 12**), and initiating (**46**), by the processing circuitry (**102**), conditioning of said at least one specific vehicle system (**10, 12**).

**Example 18:** The method of Example 17, further comprising: shutting down (**47**), without any delay, any vehicle system (**10, 12**) for which no need for conditioning is determined.

**Example 19:** A computer program product comprising program code for performing, when executed by the processing circuitry, the method of any of Examples 11-18.

**Example 20:** A non-transitory computer-readable storage medium comprising instructions, which when executed by the processing circuitry, cause the processing circuitry to perform the method of any of Examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (**100**) comprising processing circuitry (**102**) configured to:
determine at least one vehicle system (**10, 12**) being in an active mode, said at least one vehicle system (**10, 12**) building up a need for conditioning when in the active mode and/or in an inactive mode,
determine that no request for usage of the at least one vehicle system (**10, 12**) is present, thereby triggering a request for shut down of said at least one vehicle system (**10**, **12**),
determine a need for conditioning of said at least one vehicle system (**10, 12**),
delay shut down of said at least one vehicle system (**10, 12**), and
initiate conditioning of said at least one vehicle system (**10, 12**).

2. The computer system of claim 1, wherein the processing circuitry is further configured to:
shut down said at least one vehicle system (**10, 12**) after completing said conditioning of said at least one vehicle system (**10, 12**).

3. The computer system of any of claims 1-2, wherein the processing circuitry is further configured to:
receive a request for active usage of said at least one vehicle system (**10, 12**), and
terminate the conditioning based on the request for active usage.

4. The computer system of any of claims 1-3, wherein the processing circuitry is further configured to:
receive a request for cancelling conditioning of said at least one vehicle system (**10, 12**), and
terminate the conditioning based on the request for cancelling.

5. The computer system of any of claims 1-4, wherein the processing circuitry is further configured to:
receive a request for shut down of said at least one vehicle system (**10, 12**) after initiating conditioning of said at least one vehicle system (**10, 12**), and
terminate the conditioning based on the request for shut down.

6. The computer system of any of claims 1-5, wherein said at least one vehicle system (**10, 12**) is a rechargeable energy storage system (**10**) or a fuel cell system (**12**).

7. The computer system of claim 1, wherein said at least one vehicle system (**10, 12**) is a rechargeable energy storage system (**10**) or a fuel cell system (**12**), and wherein the processing circuitry (**102**) is further configured to:
shut down said at least one vehicle system (**10, 12**) after completing said conditioning of said at least one vehicle system (**10, 12**),
receive a request for active usage of said at least one vehicle system (**10, 12**), receive a request for cancelling conditioning of said at least one vehicle system (**10, 12**), or receive a request for shut down of said at least one vehicle system (**10, 12**), and
terminate the conditioning based on the request for active usage, cancelling, and/or shutdown.

8. A vehicle (**1**) comprising the computer system (**100**) of any of claims 1-7.

9. The vehicle of claim 8, further comprising at least one rechargeable energy storage system (**10**).

10. The vehicle of claim 8 or 9, further comprising at least one fuel cell system (**12**).

11. A computer-implemented method (**40**), comprising:
determining (**41**), by processing circuitry (**102**) of a computer system, at least one vehicle system (**10, 12**) being in an active mode, said at least one vehicle system (**10, 12**) building up a need for conditioning when in the active mode and/or in an inactive mode,
determining (**42**), by the processing circuitry (**102**), that no request for usage of the at least one vehicle system (**10, 12**) is present,
triggering (**43**), by the processing circuitry (**102**), a request for shut down of said at least one vehicle system (**10, 12**),
determining (**44**), by the processing circuitry (**102**), a need for conditioning of said at least one vehicle system (**10, 12**),
delaying (**45**), by the processing circuitry (**102**), shut down of said at least one vehicle system (**10, 12**), and
initiating (**46**), by the processing circuitry (**102**), conditioning of said at least one vehicle system (**10, 12**).

12. The method of claim 11, further comprising:
determining (**41**), by the processing circuitry (**102**), a plurality of vehicle systems (**10, 12**) being in an active mode, each vehicle system (**10, 12**) building up a need for conditioning when in the active mode and/or in an inactive mode,
determining (**42**), by the processing circuitry (**102**), that no request for usage of at least one specific vehicle system (**10, 12**) is present,
triggering (**43**), by the processing circuitry (**102**), a request for shut down of each vehicle systems (**10, 12**),
determining (**44**), by the processing circuitry (**102**), a need for conditioning of said at least one specific vehicle system (**10, 12**),
delaying (**45**), by the processing circuitry (**102**), shut down of said at least one specific vehicle system (**10, 12**), and
initiating (**46**), by the processing circuitry (**102**), conditioning of said at least one specific vehicle system (**10, 12**).

13. The method of claim 12, further comprising:
shutting down (**47**), without any delay, any vehicle system (**10, 12**) for which no need for conditioning is determined.

14. A computer program product comprising program code for performing, when executed by the processing circuitry, the method of any of claims 11-13.

15. A non-transitory computer-readable storage medium comprising instructions, which when executed by the processing circuitry, cause the processing circuitry to perform the method of any of claims 11-13.
